# EUROPÄISCHE PATENTSCHRIFT

(11) **EP 3 673 176 B1**
(45) Veröffentlichungstag und Bekanntmachung des Hinweises auf die Patenterteilung: **28.04.2021**
(21) Anmeldenummer: 18752106.7
(22) Anmeldetag: 27.07.2018
(51) Int. Cl.: F04B 1/053, F04B 1/04, F04B 9/04, F16H 53/02, F16C 3/02, F01L 1/047, F01L 1/08

(54) **NOCKENWELLE FÜR EINE PUMPE, INSBESONDERE EINE KRAFTSTOFFHOCHDRUCKPUMPE, UND PUMPE MIT NOCKENWELLE**
CAMSHAFT FOR A PUMP, IN PARTICULAR A HIGH PRESSURE FUEL PUMP, AND PUMP HAVING A CAMSHAFT
ARBRE À CAMES DESTINÉ À UNE POMPE, EN PARTICULIER À UNE POMPE À CARBURANT HAUTE PRESSION, ET POMPE MUNIE D'UN ARBRE À CAMES

(30) Priorität: 23.08.2017 DE 102017214728
(43) Veröffentlichungstag der Anmeldung: 01.07.2020
(73) Patentinhaber: Robert Bosch GmbH, 70442 Stuttgart (DE)
(72) Erfinder: IMHOF, Michael, 70026 Modugno (IT); MAYER, Robert, 71272 Renningen (DE)
(86) Internationale Anmeldenummer: PCT/EP2018/070395
(87) Internationale Veröffentlichungsnummer: WO 2019/038024

(56) Entgegenhaltungen:
- DE-A1-102009 002 014
- DE-C1- 3 913 104
- DE-T5-112012 005 954
- US-A1- 2008 121 216

## Beschreibung

### Stand der Technik

Die Erfindung geht aus von einer Nockenwelle für eine Pumpe, insbesondere eine Kraftstoffhochdruckpumpe, nach der Gattung des Anspruchs 1 und von einer Pumpe mit Nockenwelle nach der Gattung des Anspruchs 7.

Eine solche Nockenwelle und eine solche Pumpe in Form einer Kraftstoffhochdruckpumpe ist durch die DE 10 2009 002 014 A1 bekannt. Diese Pumpe weist zwei Pumpenelemente mit jeweils einem Pumpenkolben und eine Nockenwelle auf, durch die die Pumpenkolben über jeweils einen Rollenstößel in einer Hubbewegung angetrieben werden. Die Nockenwelle weist zwei in Richtung ihrer Längsachse nebeneinander angeordnete Nocken auf, deren Nockenerhebungen um die Längsachse der Nockenwelle zueinander versetzt angeordnet sind. Die Nocken können beispielsweise 180°-Doppelnocken sein und deren Nockenerhebungen sind um 90° um die Längsachse der Nockenwelle zueinander versetzt oder verdreht angeordnet. Neben den Nocken weist die Nockenwelle wenigstens einen Lagerbereich auf, über den die Nockenwelle beispielsweise in einem Gehäuse der Pumpe um ihre Längsachse drehbar gelagert ist. Der Abstand der Nocken in Richtung der Längsachse der Nockenwelle ist erforderlich, um die beiden Pumpenelemente nebeneinander unterzubringen können. Zwischen den beiden Nocken ist dadurch ein Zwischenbereich vorhanden, der bei der bekannten Nockenwelle durch Außenrunddrehen auf einen Durchmesser gefertigt ist, der etwa so groß ist wie der Durchmesser des Lagerbereichs. Während des Betriebs der Pumpe tritt durch den Antrieb der Pumpenkolben eine Belastung der Nocken der Nockenwelle auf, die zu einer Biegebelastung des Zwischenbereichs der Nockenwelle führt. Durch die Biegung des Zwischenbereichs der Nockenwelle verändert sich auch die Ausrichtung der Nocken bezüglich der Pumpenkolben, indem diese verkippt werden. Hierdurch treten große Belastungen im Antrieb der Pumpenkolben auf, beispielsweise Schrägstellungen zwischen den Rollenstößeln und den Nocken, was zu erhöhtem Verschleiß der Nocken sowie des Rollenstößels und der Rolle führen kann. Außerdem wird durch die Biegung des Zwischenbereichs der Nockenwelle auch der wenigstens eine Lagerbereich verkippt, wodurch sich hohe Belastungen, insbesondere einseitige Belastungen an der Kante des Lagerbereichs der Nockenwelle ergeben.

### Offenbarung der Erfindung

### Vorteile der Erfindung

Die erfindungsgemäße Nockenwelle mit den Merkmalen gemäß Anspruch 1 hat demgegenüber den Vorteil, dass die Biegung der Nockenwelle im Zwischenbereich gering gehalten werden kann, so dass die Nocken und der wenigstens eine Lagerbereich bei Belastung der Nockenwelle während des Betriebs nicht oder nur gering verkippt werden und deren Ausrichtung weitgehend erhalten bleibt und dadurch der Verschleiß der Nocken sowie Rollenstößel und Rollen gering gehalten werden kann.

In den abhängigen Ansprüchen sind vorteilhafte Ausgestaltungen und Weiterbildungen der erfindungsgemäßen Nockenwelle angegeben. Durch die Ausbildung gemäß Anspruch 2 ist sichergestellt, dass die Bearbeitung der Nocken durch den Zwischenbereich nicht beeinträchtigt wird. Die Ausbildung gemäß Anspruch 3 ermöglicht eine einfache Herstellung des Zwischenbereichs und die Vermeidung von Spannungserhöhungen infolge Kerbwirkung.

### Zeichnung

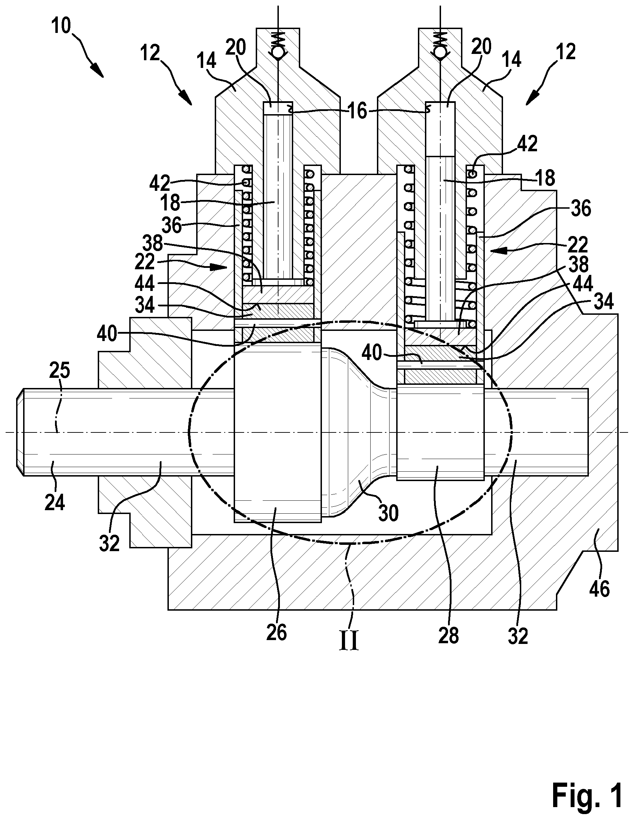

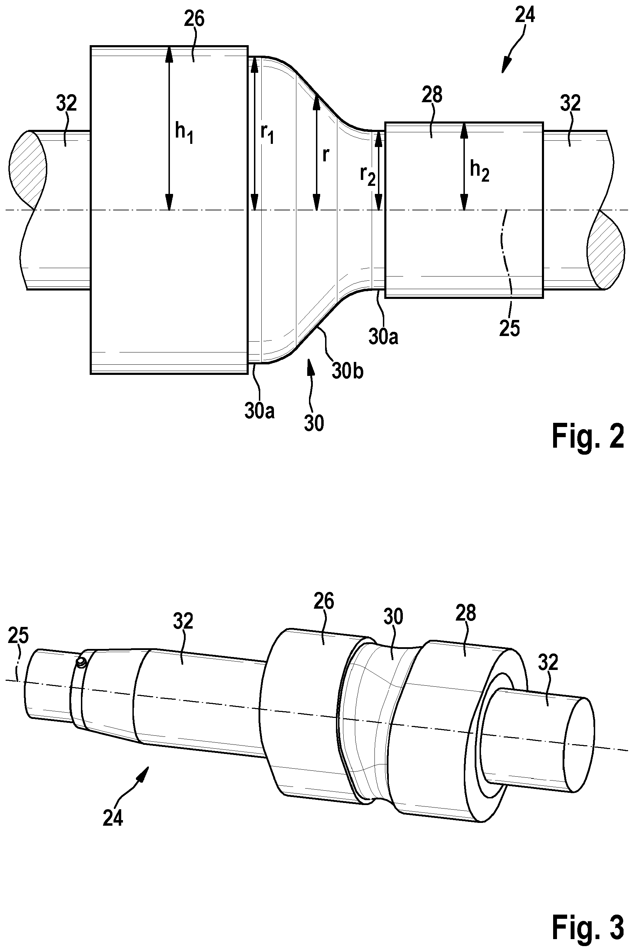

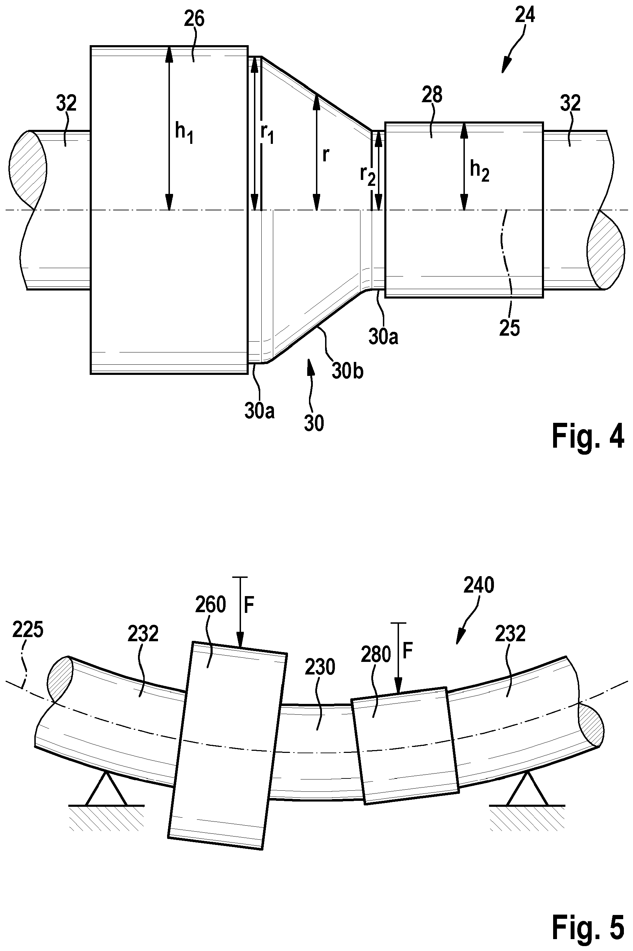

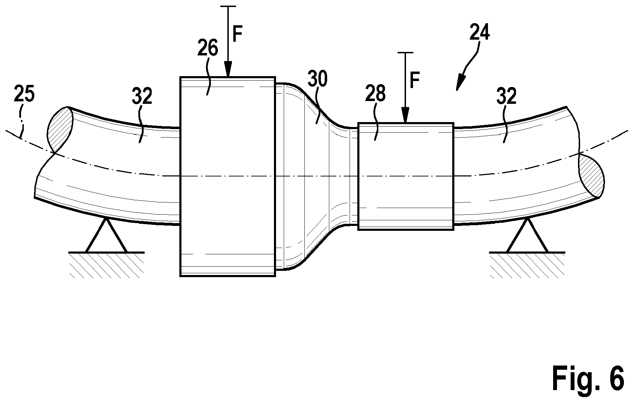

Mehrere Ausführungsbeispiele der Erfindung sind in der Zeichnung dargestellt und in der nachfolgenden Beschreibung näher erläutert. Es zeigen Figur 1 eine Pumpe mit einem Pumpenelement und einer Nockenwelle ausschnittsweise in einem Längsschnitt, Figur 2 einen in Figur 1 mit II bezeichneten Ausschnitt der Nockenwelle in vergrößerter Darstellung gemäß einem ersten Ausführungsbeispiel, Figur 3 die Nockenwelle in einer perspektivischen Darstellung gemäß dem ersten Ausführungsbeispiel, Figur 4 den Ausschnitt II der Nockenwelle gemäß einem zweiten Ausführungsbeispiel, Figur 5 eine Nockenwelle gemäß dem Stand der Technik bei deren Durchbiegung bei Belastung und Figur 6 eine erfindungsgemäße Nockenwelle bei deren Durchbiegung bei Belastung.

### Beschreibung der Ausführungsbeispiele

In den Figuren 1 bis 6 ist in vereinfachter Darstellung eine Pumpe 10 gezeigt, die insbesondere zur Kraftstoffhochdruckförderung bei einer Kraftstoffeinspritzeinrichtung einer Brennkraftmaschine vorgesehen ist. Die Pumpe 10 weist wenigstens zwei Pumpenelemente 12 auf, die jeweils ein Gehäuseteil 14 aufweisen, in denen in jeweils einer Zylinderbohrung 16 ein Pumpenkolben 18 beweglich geführt ist, der in der jeweiligen Zylinderbohrung 16 einen Pumpenarbeitsraum 20 begrenzt. Die Pumpenkolben 18 werden über jeweils einen Stößel 22 durch eine Nockenwelle 24 in einer Hubbewegung in zumindest annähernd radialer Richtung bezüglich der Drehachse 25 der Nockenwelle 24 angetrieben wird. Die Drehachse 25 der Nockenwelle 24 ist koaxial zu deren Längsachse. Die Nockenwelle 24 kann Teil der Pumpe 10 sein oder alternativ kann auch vorgesehen sein, dass die Pumpe 10 keine eigene Nockenwelle aufweist und die Nockenwelle 24 Teil der Brennkraftmaschine ist.

Die Nockenwelle 24 weist für den Antrieb der Pumpenkolben 18 zwei in Richtung ihrer Längsachse 25 nebeneinander angeordnete Nocken 26, 28 auf, die jeweils als Einfach- oder Mehrfachnocken ausgebildet sein können, beispielsweise als 180°-Doppelnocken. Die Nocken 26, 28 sind um die Längsachse 25 der Nockenwelle 24 zueinander versetzt oder verdreht angeordnet, beispielsweise um etwa 90° um die Längsachse 25 versetzt. In Richtung der Längsachse 25 der Nockenwelle 24 ist zwischen den beiden Nocken 26 und 28 ein Zwischenbereich 30 vorhanden, der nachfolgend näher erläutert wird. In Richtung der Längsachse 25 der Nockenwelle 24 ist neben wenigstens einem Nocken 26 oder 28, vorzugsweise neben beiden Nocken 26 und 28 auf der dem Zwischenbereich 30 abgewandten Seite jeweils ein Lagerbereich 32 der Nockenwelle 24 vorgesehen.

Die Lagerbereiche 32 sind jeweils kreiszylinderförmig ausgebildet und über diese ist die Nockenwelle 24 beispielsweise in jeweiligen Gleitlagern drehbar gelagert. Die Stößel 22 sind jeweils als Rollenstößel ausgebildet und in diesen ist jeweils eine Rolle 34 drehbar gelagert, die auf dem Nocken 26 bzw. 28 abwälzt. Der Stößel 22 kann jeweils einen Stößelkörper 36 aufweisen, wobei die Rolle 34 im Stößelkörper 36 oder in einem im Stößelkörper 36 angeordneten Rollenschuh 38 in einer Ausnehmung über ihren Außenmantel nach Art eines Gleitlagers drehbar gelagert ist. Alternativ kann die Rolle 34 auch hohl ausgeführt sein und auf einem im Stößelkörper 36 gehaltenen Lagerbolzen 40 drehbar gelagert sein. Der Stößel 22 und der Pumpenkolben 18 werden durch eine Stößelfeder 42 zum Nocken 26 bzw. 28 hin beaufschlagt. Der Stößel 22 ist in einer Aufnahme 44 verschiebbar geführt, wobei die Aufnahme 44 in einem Gehäuseteil 46 der Pumpe 10 oder in einem Gehäuseteil der Brennkraftmaschine ausgebildet ist. Die Gehäuseteile 14 der beiden Pumpenelemente 12 können einstückig ausgebildet sein oder als separate Bauteile und sind mit dem Gehäuseteil 46 verbunden.

Nachfolgend wird die Ausbildung des Zwischenbereichs 30 der Nockenwelle 24 näher erläutert. Durch die um die Längsachse 25 der Nockenwelle 24 zueinander versetzte Anordnung der Nockenerhebungen der Nocken 26 und 28 weisen diese in die Längsachse 25 der Nockenwelle 24 enthaltenden axialen Längsschnitten unterschiedliche radiale Abstände h1 und h2 von der Längsachse 25 auf. In einem axialen Längsschnitt weist der Nocken 26 seine maximale Nockenerhebung mit dessen oberem Totpunkt auf, während der andere Nocken 28 seine minimale Nockenerhebung mit dessen unterem Totpunkt aufweist. In einem um 90° oder 270° um die Längsachse 25 gedrehten axialen Längsschnitt weist dann der Nocken 26 seine minimale Nockenerhebung mit dessen unterem Totpunkt auf während der andere Nocken 28 seine maximale Nockenerhebung mit dessen oberem Totpunkt aufweist. In jedem axialen Längsschnitt ergeben sich unterschiedliche Nockenerhebungen der beiden Nocken 26, 28 abhängig von der Lage des jeweiligen axialen Längsschnitts.

Der Zwischenbereich 30 ist so ausgebildet, dass dieser in die Längsachse 25 der Nockenwelle 24 enthaltenden axialen Längsschnitten in einem radialen Abstand r von der Längsachse 25 verläuft, der ausgehend von dem angrenzenden Nocken 26 mit der im jeweiligen axialen Längsschnitt kleineren Nockenerhebung h1 zu dem angrenzenden Nocken 28 mit der im jeweiligen axialen Längsschnitt größeren Nockenerhebung h2 hin zunimmt. Der Verlauf des Zwischenbereichs 30 zwischen den beiden angrenzenden Nocken 26, 28 ist vorzugsweise stufenlos. Hierdurch wird die Herstellung des Zwischenbereichs 30 vereinfacht und es ergeben sich keine Kerbwirkungen, die zu Spannungserhöhungen führen können.

In den angrenzenden Nocken 26, 28 zugewandten Randbereichen 30a des Zwischenbereichs 30 verläuft dieser in die Längsachse 25 enthaltenden axialen Längsschnitten in einem radialen Abstand r1 bzw. r2 von der Längsachse 25, der gleich groß oder etwas kleiner ist als der radiale Abstand h1 bzw. h2 der Nockenerhebung des jeweils angrenzenden Nockens 26 bzw. 28. Die Randbereiche 30a des Zwischenbereichs 30 ragen somit in die Längsachse 25 enthaltenden axialen Längsschnitten in radialer Richtung bezüglich der Längsachse 25 nicht über die Nockenerhebung des jeweils angrenzenden Nockens 26 bzw. 28 hinaus. Hierdurch ist sichergestellt, dass bei der Bearbeitung der Nockenerhebungen der Nocken 26, 28 mittels eines Werkzeugs, beispielsweise eines Schleifwerkzeugs, genügend Raum in Richtung der Längsachse 25 der Nockenwelle 24 für einen Auslauf des Werkzeugs vorhanden ist. Vorzugsweise ist der radiale Abstand r1 bzw. r2 der Randbereiche 30a des Zwischenbereichs 30 um wenige Millimeter kleiner als die Nockenerhebungen h1 bzw. h2 der angrenzenden Nocken 26 bzw. 28. Die Randbereiche 30a des Zwischenbereichs 30 verlaufen in die Längsachse 25 der Nockenwelle 24 enthaltenden axialen Längsschnitten beispielsweise etwa parallel zur Längsachse 25. Am Übergang von der Nocken 26, 28 zu den Randbereichen 30a des Zwischenbereichs 30 ist somit jeweils eine Stufe vorhanden.

Bei einem in den Figuren 2 und 3 dargestellten ersten Ausführungsbeispiel weist der Zwischenbereich 30 in seinem mittleren Bereich 30b zwischen den Randbereichen 30a in die Längsachse 25 der Nockenwelle 24 enthaltenden axialen Längsschnitten einen gekrümmten Verlauf auf, der vorzugsweise kontinuierlich ist und keine Stufe und keinen Knick aufweist. In der Figur 3 ist dabei erkennbar wie sich der Verlauf des Zwischenbereichs 30 über den Umfang der Nockenwelle 24 ändert entsprechend dem Verlauf der Nockenerhebungen der angrenzenden Nocken 26, 28.

Bei einem in Figur 4 dargestellten zweiten Ausführungsbeispiel weist der Zwischenbereich 30 in seinem mittleren Bereich 30b zwischen den Randbereichen 30a in die Längsachse 25 der Nockenwelle 24 enthaltenden axialen Längsschnitten einen geraden, bezüglich der Längsachse 25 geneigten Verlauf auf. Der Übergang vom mittleren Bereich 30b zu den Randbereichen 30a des Zwischenbereichs 30 kann wie in Figur 4 oben dargestellt mit einem Knick oder wie in Figur 4 unten dargestellt gerundet ausgebildet sein.

Die Nockenwelle 24 kann beispielsweise in einem Schmiedeverfahren hergestellt werden, wobei die Kontur des Zwischenbereichs 30 bereits im Schmiedewerkzeug weitgehend erzeugt werden kann. Falls erforderlich kann eine Nachbearbeitung des Zwischenbereichs 30 beispielsweise mit einem spanabhebenden Verfahren erfolgen. Alternativ kann die Nockenwelle 24 auch in einem Gießverfahren oder einem 3D-Druckverfahren hergestellt werden, in dem die Kontur des Zwischenbereichs 30 weitgehend erzeugt werden kann. Durch die vorstehend erläuterte Ausbildung des Zwischenbereichs 30 ist eine Bearbeitung der Nocken 26, 28 nicht beeinträchtigt.

Anhand der Figuren 5 und 6, die stark vereinfachte Prinzipskizzen der Nockenwelle darstellen, wird die verringerte Durchbiegung der erfindungsgemäßen Nockenwelle 24 bei Belastung gegenüber einer Nockenwelle 240 gemäß dem Stand der Technik verdeutlicht. In Figur 5 ist eine Nockenwelle 240 gemäß dem Stand der Technik dargestellt, wobei die Belastung der beiden Nocken 260 und 280 durch Kraftpfeile F dargestellt ist und die Lagerbereiche 232 der Nockenwelle dargestellt sind. Die Durchbiegung der Nockenwelle 240 insbesondere im Zwischenbereich 230 zwischen den Nocken 260 und 280 ist am Verlauf der Längsachse 250 der Nockenwelle 240 erkennbar. Diese Durchbiegung führt zu einer Verkippung der Nocken 260, 280, wodurch die Anlage der Rollen der Rollenstößel beeinträchtigt und Verschleiß verursacht wird. Bei der erfindungsgemäßen Ausbildung der Nockenwelle 24 gemäß Figur 6 ist am Verlauf der Längsachse 25 erkennbar, dass insbesondere im Zwischenbereich 30 eine wesentlich geringere Durchbiegung der Nockenwelle 24 vorhanden ist, so dass keine oder nur eine geringe Verkippung der Nocken 26, 28 auftritt und die korrekte Anlage der Rollen 34 der Stößel 22 weitgehend erhalten bleibt und somit Verschleiß vermieden wird.

## Patentansprüche

1. Nockenwelle, insbesondere für eine Pumpe, mit wenigstens zwei in Richtung der Längsachse (25) der Nockenwelle (24) nebeneinander angeordneten Nocken (26, 28), deren Nockenerhebungen um die Längsachse (25) der Nockenwelle (24) zueinander versetzt angeordnet sind, wobei zwischen zwei benachbarten Nocken (26, 28) ein Zwischenbereich (30) vorgesehen ist, und mit wenigstens einem in Richtung der Längsachse (25) der Nockenwelle (24) neben den Nocken (26, 28) angeordneten Lagerbereich (32), **dadurch gekennzeichnet, dass** der Zwischenbereich (30) in die Längsachse (25) der Nockenwelle (24) enthaltenden axialen Längsschnitten in einem radialen Abstand (r1, r2) von der Längsachse (25) der Nockenwelle (24) verläuft, der ausgehend vom angrenzenden Nocken (26) mit der im jeweiligen axialen Längsschnitt kleineren Nockenerhebung (h1) zu dem angrenzenden Nocken (28) mit der im jeweiligen axialen Längsschnitt größeren Nockenerhebung (h2) hin zunimmt.

2. Nockenwelle nach Anspruch 1, **dadurch gekennzeichnet, dass** der Zwischenbereich (30) in die Längsachse (25) der Nockenwelle (24) enthaltenden axialen Längsschnitten in dessen den angrenzenden Nocken (26, 28) zugewandten Randbereichen (30a) jeweils in einem radialen Abstand (r1, r2) von der Längsachse (25) der Nockenwelle (24) verläuft, der gleich groß oder nur wenig kleiner ist wie der radiale Abstand (h1, h2) der Nockenerhebung des jeweils angrenzenden Nockens (24) von der Längsachse (25) der Nockenwelle (24) ist.

3. Nockenwelle nach Anspruch 1 oder 2, **dadurch gekennzeichnet, dass** der Zwischenbereich (30) zwischen den jeweils angrenzenden Nocken (26, 28) einen stufen losen Verlauf aufweist.

4. Nockenwelle nach einem der vorstehenden Ansprüche, **dadurch gekennzeichnet, dass** der Zwischenbereich (30) in seinen in dessen den angrenzenden Nocken (26, 28) zugewandten Randbereichen (30a) in die Längsachse (25) der Nockenwelle (24) enthaltenden axialen Längsschnitten jeweils zumindest annähernd parallel zur Längsachse (25) der Nockenwelle (24) verläuft.

5. Nockenwelle nach einem der vorstehenden Ansprüche, **dadurch gekennzeichnet, dass** der Zwischenbereich (30) in einem zwischen dessen den angrenzenden Nocken (26, 28) zugewandten Randbereichen (30a) liegenden mittleren Bereich (30b) in die Längsachse (25) der Nockenwelle (24) enthaltenden axialen Längsschnitten einen gekrümmten Verlauf aufweist.

6. Nockenwelle nach einem der Ansprüche 1 bis 4, **dadurch gekennzeichnet, dass** der Zwischenbereich (30) in einem zwischen dessen den angrenzenden Nocken (26, 28) zugewandten Randbereichen (30a) liegenden mittleren Bereich (30b) in die Längsachse (25) der Nockenwelle (24) enthaltenden axialen Längsschnitten einen bezüglich der Längsachse (25) der Nockenwelle (24) geneigten geraden Verlauf aufweist.

7. Pumpe, insbesondere Kraftstoffhochdruckpumpe, mit wenigstens zwei Pumpenelementen (12), die jeweils einen Pumpenkolben (18) aufweisen, und mit einer Nockenwelle (24), durch die die Pumpenkolben (18) zumindest mittelbar in einer Hubbewegung angetrieben werden, **dadurch gekennzeichnet, dass** die Nockenwelle (24) gemäß einem der vorstehenden Ansprüche ausgebildet ist.

## Claims

1. Camshaft, in particular for a pump, having at least two cams (26, 28) which in the direction of the longitudinal axis (25) of the camshaft (24) are disposed beside one another, the cam elevations of said cams being mutually offset about the longitudinal axis (25) of the camshaft (24), wherein an intermediate region (30) is provided between two neighboring cams (26, 28), and having at least one bearing region (32) which in the direction of the longitudinal axis (25) of the camshaft (24) is disposed beside the cams (26, 28), **characterized in that** the intermediate region (30) in axial longitudinal sections that contain the longitudinal axis (25) of the camshaft (24) runs at a radial spacing (r1, r2) from the longitudinal axis (25) of the camshaft (24), said radial spacing (r1, r2) proceeding from the adjacent cam (26) having in the respective axial longitudinal section the smaller cam elevation (h1) so as to increase toward the adjacent cam (28) having in the respective axial longitudinal section the larger cam elevation (h2).

2. Camshaft according to Claim 1, **characterized in that** the intermediate region (30) in axial longitudinal sections that contain the longitudinal axis (25) of the camshaft (24) in the peripheral regions (30a) of said intermediate region (30) that face the adjacent cams (26, 28) runs in each case at a radial spacing (r1, r2) from the longitudinal axis (25) of the camshaft (24) which is of equal size as or only slightly smaller than the radial spacing (h1, h2) of the cam elevation of the respective adjacent cam (24) from the longitudinal axis (25) of the camshaft (24).

3. Camshaft according to Claim 1 or 2, **characterized in that** the intermediate region (30) between the respective adjacent cams (26, 28) has a stepless profile.

4. Camshaft according to one of the preceding claims, **characterized in that** the intermediate region (30) in the peripheral regions (30a) thereof that face the adjacent cams (26, 28) in axial longitudinal sections that contain the longitudinal axis (25) of the camshaft (24) runs in each case at least almost parallel to the longitudinal axis (25) of the camshaft (24).

5. Camshaft according to one of the preceding claims, **characterized in that** the intermediate region (30) in a central region (30b) that lies between the peripheral regions (30a) of said intermediate region (30) that face the adjacent cams (26, 28) in axial longitudinal sections that contain the longitudinal axis (25) of the camshaft (24) has a curved profile.

6. Camshaft according to one of Claims 1 to 4, **characterized in that** the intermediate region (30) in a central region (30b) that lies between the peripheral regions (30a) of said intermediate region (30) that face the adjacent cams (26, 28) in axial longitudinal sections that contain the longitudinal axis (25) of the camshaft (24) has a straight profile that is inclined in terms of the longitudinal axis (25) of the camshaft (24) .

7. Pump, in particular a high pressure fuel pump, having at least two pump elements (12) which have in each case one pump piston (18), and having a camshaft (24) by way of which the pump pistons (18) are at least indirectly driven in a reciprocating stroke movement, **characterized in that** the camshaft (24) is configured according to one of the preceding claims.

## Revendications

1. Arbre à cames, en particulier pour une pompe, comprenant au moins deux cames (26, 28) disposées l'une à côté de l'autre dans la direction de l'axe longitudinal (25) de l'arbre à cames (24), dont les bossages de came sont disposés de manière décalée l'un par rapport à l'autre autour de l'axe longitudinal (25) de l'arbre à cames (24), une région intermédiaire (30) étant prévue entre deux cames adjacentes (26, 28), et comprenant au moins une région de palier (32) disposée à côté des cames (26, 28) dans la direction de l'axe longitudinal (25) de l'arbre à cames (24), **caractérisé en ce que** la région intermédiaire (30) s'étend dans des portions longitudinales axiales contenant l'axe longitudinal (25) de l'arbre à cames (24), à une distance radiale (r1, r2) de l'axe longitudinal (25) de l'arbre à cames (24) qui augmente à partir de la came adjacente (26) avec le plus petit bossage de cames (h1) en coupe longitudinale axiale respective en direction de la came adjacente (28) avec le plus grand bossage de came (h2) en coupe longitudinale axiale respective.

2. Arbre à cames selon la revendication 1, **caractérisé en ce que** la région intermédiaire (30), dans des portions longitudinales axiales contenant l'axe longitudinal (25) de l'arbre à cames (24), s'étend dans ses régions de bord (30a) tournées vers les cames adjacentes (26, 28), à chaque fois à une distance radiale (r1, r2) de l'axe longitudinal (25) de l'arbre à cames (24), laquelle distance est identique ou seulement légèrement inférieure à la distance radiale (h1, h2) du bossage de cames de la came respectivement adjacente (24) à l'axe longitudinal (25) de l'arbre à cames (24).

3. Arbre à cames selon la revendication 1 ou 2, **caractérisé en ce que** la région intermédiaire (30) entre les cames respectivement adjacentes (26, 28) présente une allure continue.

4. Arbre à cames selon l'une quelconque des revendications précédentes, **caractérisé en ce que** la région intermédiaire (30) s'étend, dans ses régions de bord (30a) tournées vers les cames adjacentes (26, 28), dans des portions longitudinales axiales contenant l'axe longitudinal (25) de l'arbre à cames (24), à chaque fois au moins approximativement parallèlement à l'axe longitudinal (25) de l'arbre à cames (24).

5. Arbre à cames selon l'une quelconque des revendications précédentes, **caractérisé en ce que** la région intermédiaire (30), dans une région centrale (30b) située entre ses régions de bord (30a) tournées vers les cames adjacentes (26, 28), dans des portions longitudinales axiales contenant l'axe longitudinal (25) de l'arbre à cames (24), présente une allure courbe.

6. Arbre à cames selon l'une quelconque des revendications 1 à 4, **caractérisé en ce que** la région intermédiaire (30), dans une région centrale (30b) située entre ses régions de bord (30a) tournées vers les cames adjacentes (26, 28), dans des portions longitudinales axiales contenant l'axe longitudinal (25) de l'arbre à cames (24), présente une allure droite inclinée par rapport à l'axe longitudinal (25) de l'arbre à cames (24).

7. Pompe, en particulier pompe à carburant haute pression, comprenant au moins deux éléments de pompe (12) qui présentent chacun un piston de pompe (18) et comprenant un arbre à cames (24) par lequel les pistons de pompe (18) sont entraînés au moins indirectement suivant un mouvement en va-et-vient, **caractérisée en ce que** l'arbre à cames (24) est réalisé selon l'une quelconque des revendications précédentes.
